# EUROPEAN PATENT APPLICATION

(11) **EP 4 299 838 A2**
(43) Date of publication of application: **03.01.2024**
(21) Application number: 23179307.6
(22) Date of filing: 14.06.2023
(51) Int. Cl.: E02F 9/08, E02F 3/30, E02F 9/20

(54) **ELECTRIC WORK MACHINE**

(30) Priority: 28.06.2022 JP 2022103638; 28.06.2022 JP 2022103640
(71) Applicant: Yanmar Holdings Co., Ltd., Osaka-shi, Osaka (JP)
(72) Inventor: KITAHARA, Satoshi, Chikugo-shi (JP)
(74) Representative: Dennemeyer & Associates S.A.

(57) **Abstract**

[Problem] Provide an electric work machine that, while effectively using a limited and narrow space in a machine, can cool (air-cool) an electric component.

[Solution] A hydraulic excavator as an electric work machine includes: an electric motor, a battery unit that stores electric power for driving the electric motor, an electric component to which the electric power is supplied from the battery unit, a first heat exchanger that cools a refrigerant which passes through the battery unit, a hydraulic pump that is driven by the electric motor thereby to discharge a hydraulic oil, a second heat exchanger that cools the hydraulic oil, a fan that has a rotary shaft, and a partition plate. The electric component, viewed from above, is positioned between the fan and the battery unit. The first heat exchanger and the second heat exchanger, viewed from a direction of the rotary shaft, are positioned overlapping the fan, and are so positioned as to be displaced from each other in one direction intersecting the rotary shaft. The partition plate, viewed from above, is positioned between the first heat exchanger and second heat exchanger, and the battery unit, and is positioned across the one direction.

## Description

### TECHNICAL FIELD

The present invention relates to an electric work machine.

### BACKGROUND ART

Conventionally, various types of turn work instruments and electric work machines provided with electric motors, such as an electric hydraulic excavator, have been proposed. For example, Patent Document 1 discloses a turn work instrument which is provided with one water cool path that supplies a refrigerant from a radiator to a battery unit, an electric motor, an electric component, etc., and which cools the electric motor and the like. The electric components include an inverter, a DC/DC converter, etc. Further, Patent Document 2 discloses an electric hydraulic excavator having a fan for cooling the radiator, the electric motor, the inverter, etc., separate from a fan for cooling the oil cooler.

### PRIOR ART DOCUMENT

### PATENT DOCUMENT

Patent Document 1: Japanese Unexamined Patent Application Publication No. 2021-080708
Patent Document 2: Japanese Unexamined Patent Application Publication No. 2021-155991

### SUMMARY OF INVENTION

### TECHNICAL PROBLEM

The cool temperature of the refrigerant passing through the battery unit is relatively low, for example, about 40°C. Meanwhile, the electric motor and the electric component, when generating heat, cause their temperatures to be the above cool temperature or over. Thus, in a system, like the one in the Patent Document, in which the battery unit, the electric motor, and the electric component are cooled by the single water cool path, it is necessary to cool, based on the battery unit with the low cool temperature of the refrigerant, the electric component and the like in accordance with the battery unit, resulting in the cool system that is excessively large. The large cool system is not proper for a small electric hydraulic excavator with a narrow layout space for a device. Thus, it is desirable, for the small electric hydraulic excavator, to have a configuration in which the battery unit is water cooled, for example, while at least the electric component is air-cooled. Further, in the configuration of providing two fans for cooling the heat exchangers (radiator, and oil cooler), as in Patent Document 2, it is necessary to secure a space for placing two fans in a machine. In this case, in the small electric work machine with a small layout space for the device, especially, it may squeeze the space for placing another component such as the battery unit, making it difficult to load the battery unit with sufficient capacity. Thus, it is desirable to realize, in the small electric work machine, a compact layout including the fan.

However, the small electric hydraulic excavator has a narrow machine interior, causing a necessity to devise the layout of the system for air-cooling the electric component. Further, there is caused a temperature difference between a wind after cooling the radiator by being sent to the radiator, and a wind after cooling the oil cooler by being sent to the oil cooler. This is caused by the fact that the temperature of a hydraulic oil used to drive the hydraulic actuator and returned to the oil cooler is higher than the temperature of the refrigerant flowing through the radiator. Thus, mixing the wind after cooling the radiator with the wind after cooling the oil cooler causes the mixed wind to be higher in temperature than the wind after cooling the radiator, thus making the mixed wind improper for reuse for air-cooling of the device. Thus, for the reuse, it is desirable to efficiently partition winds with different temperatures.

The present invention has been made to solve the above problem, and it is an object of the present invention to provide an electric work machine that, while effectively using a limited narrow space in a machine, can cool (air-cool) an electric component, and an electric work machine that, while realizing a compact layout, can efficiently partition, for reuse, winds with different temperatures.

### SOLUTION TO PROBLEM

An electric work machine according to one aspect of the present invention includes: an electric motor; a battery unit that stores electric power for driving the electric motor; an electric component to which the electric power is supplied from the battery unit; and a fan, wherein the electric component, viewed from above, is positioned between the fan and the battery unit. An electric work machine according to one aspect of the present invention includes: a battery unit, an electric motor that is driven by electric power supplied from the battery unit, a first heat exchanger that cools a refrigerant which passes through the battery unit, a hydraulic pump that is driven by the electric motor thereby to discharge a hydraulic oil, a second heat exchanger that cools the hydraulic oil, a fan that has a rotary shaft, and a partition plate, wherein the first heat exchanger and the second heat exchanger, viewed from a direction of the rotary shaft, are positioned overlapping the fan, and are so positioned as to be displaced from each other in one direction intersecting the rotary shaft, and the partition plate, viewed from above, is positioned between the first heat exchanger and second heat exchanger, and the battery unit, and is positioned across the one direction.

### ADVANTAGEOUS EFFECTS OF INVENTION

With the above configuration, an electric work machine, while effectively using, as a space for placing an electric component, a limited narrow space between the fan and the battery unit, can cool (air-cool) an electric component, and, while easily realizing a compact layout, can efficiently partition, for reuse, winds with different temperatures.

### BRIEF DESCRIPTION OF DRAWINGS

FIG. 1 is a side view of a schematic configuration of a hydraulic excavator which is an example of an electric work machine according to an embodiment of the present invention.
FIG. 2 is a block diagram schematically showing configurations of the electrical and hydraulic systems of the hydraulic excavator.
FIG. 3 is a perspective view of an overall configuration in an engine chamber of the hydraulic excavator.
FIG. 4 is a plan view of the overall configuration in the engine chamber.
FIG. 5 is a perspective view of a part A in FIG. 4.
FIG. 6 is a perspective view of the part A with a fan and a case omitted from FIG. 5.
FIG. 7 is a perspective view of the part A with a radiator and an oil cooler omitted from FIG. 6.
FIG. 8 is a perspective view, from above, of a wind guide unit provided in the hydraulic excavator.
FIG. 9 is a perspective view, from below, of the wind guide unit.
FIG. 10 is a perspective view of the wind guide unit when cut by a horizontal cross section.
FIG. 11 is a perspective view, from below, of the wind guide unit in a state of the electric motor received.
FIG. 12 is a cross-sectional view of a first flow path unit of the wind guide unit, when cut by a cross section through an electric component.
FIG. 13 is a side view, from right, of the part A in FIG. 4.
FIG. 14 is a perspective view of a modified configuration of the hydraulic excavator.
FIG. 15 is a side view, from right, of the part A in FIG. 4.
FIG. 16 is a perspective view of the part A with the radiator and oil cooler omitted from FIG. 6.
FIG. 17 is a perspective view, from above, of the wind guide unit provided in the hydraulic excavator.
FIG. 18 is a perspective, from below, of the wind guide unit.
FIG. 19 is a perspective view of the wind guide unit when cut by a horizontal cross section.
FIG. 20 is a perspective view, from below, of the wind guide unit in a state of the electric motor received.
FIG. 21 is a cross-sectional view of the first flow path unit of the wind guide unit when cut by a cross section through the electric component.
FIG. 22 is a perspective view of a modified configuration of the hydraulic excavator.

### DESCRIPTION OF EMBODIMENTS

The following is a description of an embodiment of the present invention based on the drawings.

### [1. Electric Work Machine]

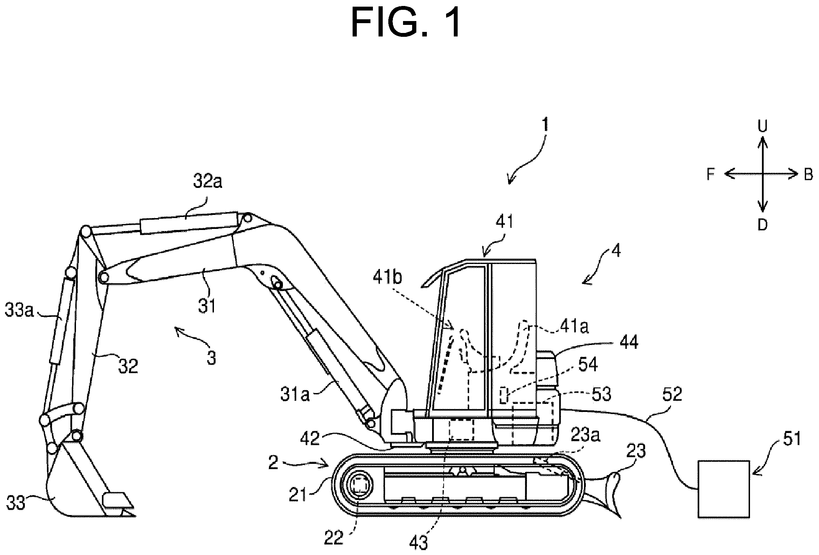

FIG. 1 is a side view of a schematic configuration of a hydraulic excavator (electric excavator) 1 which is an example of an electric work machine according to the present embodiment. The hydraulic excavator 1 is provided with a lower run body 2, a work instrument 3, and an upper turn body 4.

Here, directions are defined as follows. The direction in which an operator (manipulator, driver) seated on a drive seat 41a of the upper turn body 4 faces the front is forward, and the opposite direction is backward. Thus, when the upper turn body 4 is in a non-turn state (turn angle 0°) relative to the lower run body 2, a front-back direction of the upper turn body 4 matches the direction in which the lower run body 2 moves forward and backward. Further, the left side viewed from the operator seated on the drive seat 41a is defined as "left" and the right side is defined as "right". Further, a gravity direction perpendicular to the front-back direction and the right-left direction is defined as the up-down direction, with an upstream side of the gravity direction defined as "up" and a downstream side defined as "down". In the drawings, the hydraulic excavator 1 is shown with the upper turn body 4 in a state of non-turn relative to the lower run body 2. Further, in the drawings, when necessary, forward is denoted by a symbol "F", backward by "B", rightward by "R", leftward by "L", upward by "U", and downward by "D".

The lower run body 2 is provided with a pair of right and left crawlers 21 and a pair of right and left run motors 22. Each of the run motors 22 is a hydraulic motor. Each of the right and left run motors 22 drives one of the corresponding right and left crawlers 21, thereby making it possible to move the hydraulic excavator 1 forward and backward. A blade 23 for performing a ground leveling work and a blade cylinder 23a are provided on the lower run body 2. The blade cylinder 23a is a hydraulic cylinder that turns the blade 23 in the up-down direction.

The work instrument 3 has a boom 31, an arm 32, and a bucket 33. The boom 31, the arm 32, and the bucket 33 are independently driven, thereby making it possible to perform excavation work of earth, sand, etc.

The boom 31 is turned by a boom cylinder 31a. The boom cylinder 31a has a base end part thereof supported by a front part of the upper turn body 4, and is freely movable in an extendable and retractable manner. The arm 32 is turned by an arm cylinder 32a. The arm cylinder 32a has a base end part thereof supported by a tip part of the boom 31, and is freely movable in an extendable and retractable manner. The bucket 33 is turned by a bucket cylinder 33a. The bucket cylinder 33a has a base end part thereof supported by a tip part of the arm 32, and is freely movable in an extendable and retractable manner. The boom cylinder 31a, the arm cylinder 32a, and the bucket cylinder 33a each include a hydraulic cylinder.

The upper turn body 4 is positioned above the lower run body 2, and is so provided as to be turnable via a turn bearing (not shown) relative to the lower run body 2. In the upper turn body 4, there are placed an operation unit 41, a turn frame 42 (machine body frame), a turn motor 43, an engine chamber 44, etc. Being driven with the turn motor 43 as a hydraulic motor, the upper turn body 4 turns via the turn bearing.

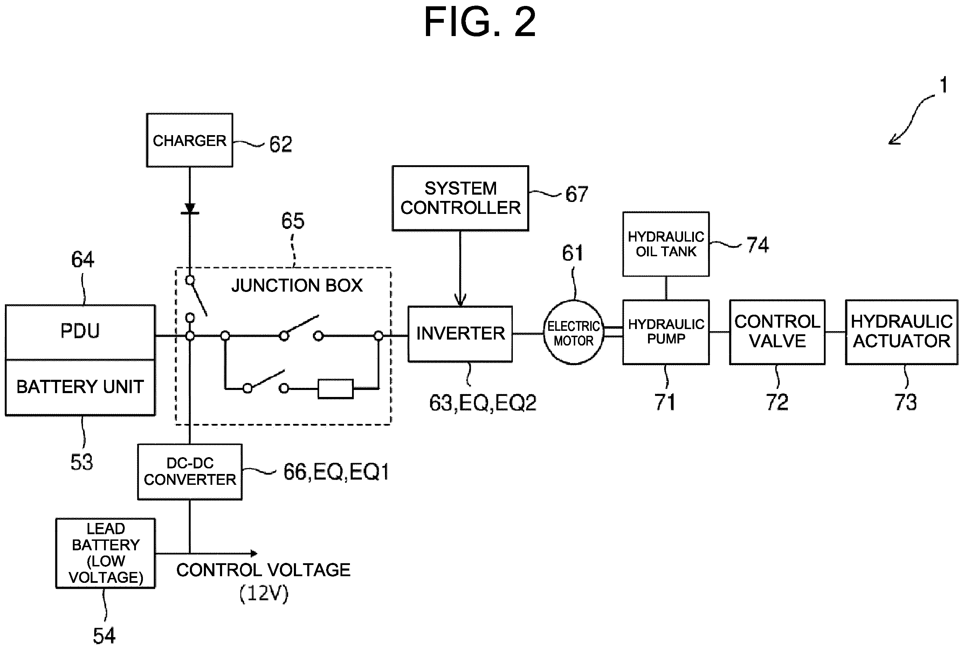

A hydraulic pump 71 (see FIG. 2) is placed in the upper turn body 4. The hydraulic pump 71 is driven by an electric motor 61 (see FIG. 2) inside the engine chamber 44. The hydraulic pump 71 supplies a hydraulic oil (pressure oil) to the hydraulic motors (the left and right run motors 22, the turn motor 43, for example), and the hydraulic cylinders (the blade cylinder 23a, the boom cylinder 31a, the arm cylinder 32a, the bucket cylinder 33a, for example). The hydraulic motors and the hydraulic cylinders that are driven with the hydraulic oil supplied from the hydraulic pump 71 are collectively referred to as a hydraulic actuator 73 (see FIG. 2).

The drive seat 41a is placed in the operation unit 41. Various levers 41b are placed around the drive seat 41a. The operator seated on the drive seat 41a operates the lever 41b, thereby to drive the hydraulic actuator 73. This allows the lower run body 2 to run, the blade 23 to perform the ground leveling work, the work instrument 3 to perform the excavation work, and the upper turn body 4 to turn, etc.

A battery unit 53 is placed in the upper turn body 4. That is, the hydraulic excavator 1 includes the battery unit 53. The battery unit 53 includes a lithium-ion battery unit, for example, and stores electric power for driving the electric motor 61. The battery unit 53 may include a plurality of batteries as a unit or may include a single battery cell. Further, in the upper turn body 4, a power feed port, not shown, is provided. The above power feed port and a commercial power source 51 which is an external power source are connected via a power feed cable 52. This can charge the battery unit 53.

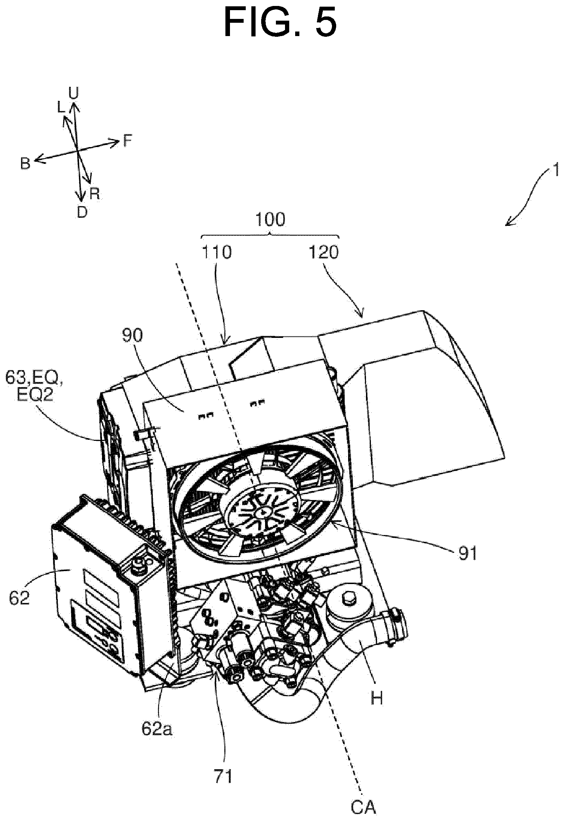

The upper turn body 4 is further provided with a lead battery 54. The lead battery 54 outputs a low voltage (12 V, for example) direct-current voltage. The output from the lead battery 54 is supplied as control voltage to, for example, a system controller 67 (see FIG. 2), a drive unit of a fan 91 (see FIG. 5), etc.

The hydraulic excavator 1 may be so configured as to be a combination of a hydraulic device such as a hydraulic actuator 73 and an actuator driven by electric power. Actuators driven by electric power include, for example, an electric run motor, an electric cylinder, and an electric turn motor.

### [2. Configuration of Electric and Hydraulic Systems]

FIG. 2 is a block diagram schematically showing configurations of an electric system and a hydraulic system of the hydraulic excavator 1. The hydraulic excavator 1 includes the electric motor 61, a charger 62, an inverter 63, a PDU (Power Drive Unit) 64, a junction box 65, a DC-DC converter 66, and the system controller 67. The system controller 67 includes an electronic control unit, also referred to as an ECU (Electronic Control Unit), and electrically controls each part of the hydraulic excavator 1.

The electric motor 61 is driven by electric power supplied from the battery unit 53 via the junction box 65 and the inverter 63. The electric motor 61 includes a permanent magnet motor or an induction motor. The electric motor 61 is placed on the turn frame 42.

Into DC voltage, the charger 62 (also referred to as a power feeder) converts AC voltage supplied from the commercial power source 51, shown in FIG. 1, via the power feed cable 52. Into AC voltage, the inverter 63 converts the DC voltage supplied from the battery unit 53, and supplies the AC voltage to the electric motor 61. This rotates the electric motor 61. The AC voltage (current) is supplied from the inverter 63 to the electric motor 61 based on the rotation command output from the system controller 67.

A PDU 64 is a battery control unit that controls an internal battery relay thereby to control the inputting and outputting of the battery unit 53. The junction box 65 is so configured as to include a charger relay, an inverter relay, a fuse and the like. The voltage output from the charger 62 is supplied via the junction box 65 and the PDU 64 to the battery unit 53. Further, the voltage output from the battery unit 53 is supplied via the PDU 64 and the junction box 65 to the inverter 63.

To a lower voltage (for example, 12 V), the DC-DC converter 66 steps down the high-voltage (for example, 300 V) DC voltage supplied from the battery unit 53 via the junction box 65. Like the output from the lead battery 54, the voltage output from the DC-DC converter 66 is supplied to the system controller 67, the drive unit of the fan 91, etc.

The DC-DC converter 66 and the inverter 63 are each an electric component EQ that converts, to a desired voltage, the voltage supplied from the battery unit 53. Further, when it is necessary to distinguish the above electric components EQ from each other, the DC-DC converter 66 is also referred to as a first electric component EQ1 and the inverter 63 is also referred to as a second electric component EQ2. That is, the hydraulic excavator 1 is provided with the electric component EQ that is supplied with power from the battery unit 53. The electric component EQ includes a first electric component EQ1 including the DC-DC converter 66 and a second electric component EQ2 including the inverter 63.

A plurality of hydraulic pumps 71 is connected to a rotary shaft (output shaft) of the electric motor 61. The plurality of hydraulic pumps 71 include a variable displacement pump and a fixed displacement pump. FIG. 2 shows only one of the hydraulic pumps 71 as an example. Each of the hydraulic pumps 71 is connected with a hydraulic oil tank 74 that tanks (stores) the hydraulic oil. The electric motor 61, when driving the hydraulic pump 71, causes the hydraulic oil in the hydraulic oil tank 74 to be supplied via the control valve 72 to the hydraulic actuator 73. This drives the hydraulic actuator 73. The control valve 72 is a direction switch valve that controls the flow direction and flowrate of the hydraulic oil supplied to the hydraulic actuator 73. That is, the hydraulic excavator 1 includes the hydraulic pump 71 driven by the electric motor 61, and the hydraulic actuator 73 driven by the hydraulic oil supplied from the hydraulic pump 71.

### [3. Configuration in Engine Chamber]

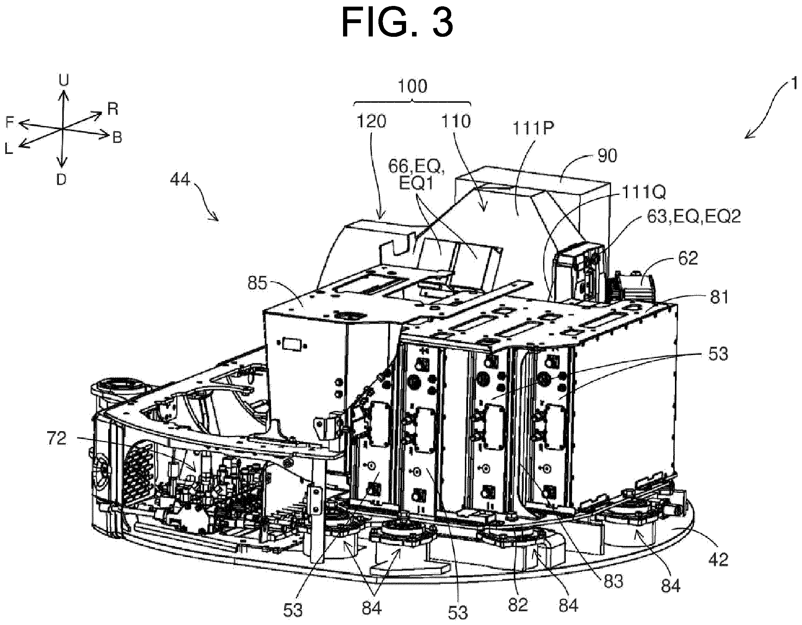

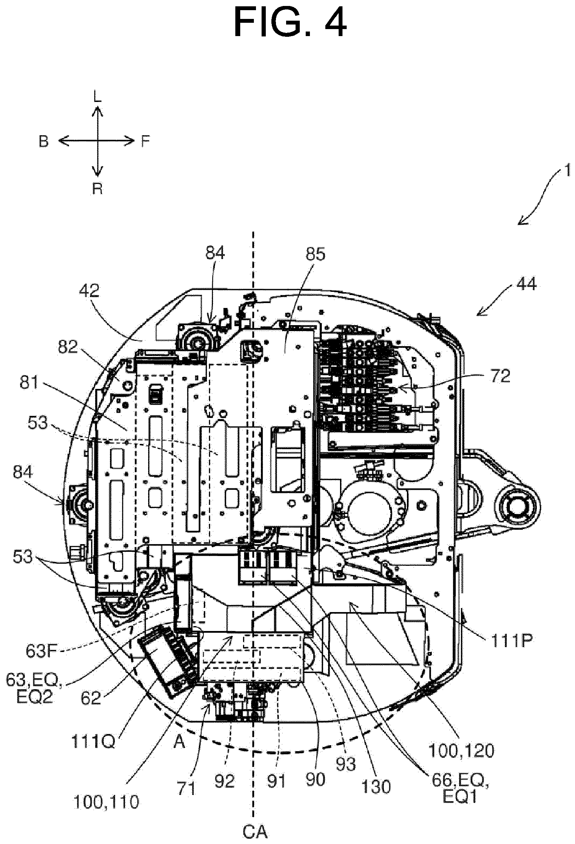

FIG. 3 is a back perspective view of the overall configuration in the engine chamber 44 of the hydraulic excavator 1. FIG. 4 is a plan view of the entire configuration in the engine chamber 44. As shown in FIG. 3, in the present embodiment, four battery units 53 are placed in a row on the turn frame 42 in the front-back direction. Each of the battery units 53 is positioned along the right-left direction. The four battery units 53, on the turn frame 42, are placed in the back part closer to the left than in the center.

In the present embodiment, the back two battery units 53, relative to the front two battery units 53, are so positioned as to be displaced to the right, that is, to the center side of the turn frame 42. Further, of the back two battery units 53, the rearmost battery unit 53 is so positioned as to be further displaced to the right than the battery unit 53 positioned in front thereof. This efficiently places the plural battery units 53 in the limited narrow space near the turn frame 42's back edge which is formed semicircular in plan view (see FIG. 4). The number and placement of the battery units 53 are not limited to the example of the present embodiment.

The plural battery units 53 are integrally supported on the turn frame 42. More in detail, the plural battery units 53 are sandwiched, from the up and down directions, between the upper plate 81 and the lower plate 82 (see FIG. 3). The upper plate 81 and the lower plate 82 are connected at several points by a connection member 83 extending in the up-down direction. The connection of the upper plate 81 with the connection member 83 and the connection of the lower plate 82 with the connection member 83 are made by bolting, for example. The lower plate 82 is supported by the support 84 on the turn frame 42 in a vibration-proof manner. Further, the position of placing the support 84 is not limited to the positions shown in FIGS. 3 and 4, and can be properly changed.

Between the upper plate 81 and the drive seat 41a (see FIG. 1), there is positioned a seat mount 85 which serves as a base of the drive seat 41a. Further, in FIGS. 3 and 4, only part of the seat mount 85 is shown for convenience.

On the turn frame 42, to the right of the battery unit 53, the above electric motor 61 (see FIG. 2), hydraulic pump 71, and the like are placed. Details thereof are to be described below.

FIG. 5 is a perspective view of a part A in FIG. 4. The part A in FIG. 4 here indicates a part positioned on the right side of the battery unit 53 which is positioned forward-most in the engine chamber 44. As shown in the same drawings, the hydraulic excavator 1 is provided with a fan 91. The fan 91 is rotatably supported by a case 90. The case 90 is frame-shaped, and opens on the left and right sides. A rotary shaft CA of the fan 91 is positioned along the right-left direction. That is, the fan 91, viewed from above, has the rotary shaft CA that extends toward the battery unit 53 (see FIG. 4). Below the fan 91 (case 90), there is positioned the hydraulic pump 71. The hydraulic pump 71 is connected with the hydraulic oil tank 74 (see FIG. 2) via a hydraulic hose H.

On the left side of the case 90, that is, between the case 90 and the battery unit 53, a wind guide unit 100 is positioned. Details of the wind guide unit 100 are to be described below. As shown in FIGS. 3 and 5, the electric components EQ, such as the inverter 63 and the DC-DC converter 66 described above, are mounted on the wind guide unit 100 (especially, first flow path unit 110 described below).

In FIG. 5, the above charger 62 is positioned behind the fan 91 (case 90) and the hydraulic pump 71. The charger 62 is supported via a mount stay 62a, etc. on the turn frame 42.

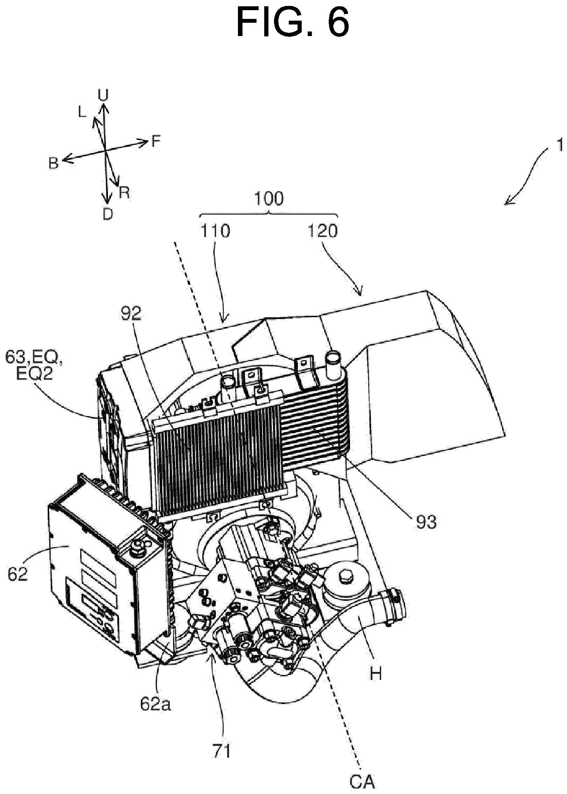

FIG. 6 shows a perspective view of the part A with the fan 91 and the case 90 omitted from FIG. 5. The hydraulic excavator 1 is further provided with a radiator 92 and an oil cooler 93. The radiator 92 is a first heat exchanger connected via a piping with the battery unit 53 shown in FIG. 3 and the like, and cools the refrigerant passing through battery unit 53. Cooling the refrigerant by heat exchange in the radiator 92 and supplying the refrigerant from the radiator 92 to the battery unit 53 can cool (water-cool) the battery unit 53. The refrigerant is, for example, cool water.

The oil cooler 93 is a second heat exchanger connected with an oil path circulating via the hydraulic pump 71 and the hydraulic actuator 73 (see FIG. 2), etc. By heat exchange, the oil cooler 93 cools the hydraulic oil flowing in the oil path by the driving of the hydraulic pump 71. Relative to the radiator 92, the oil cooler 93 is so positioned as to be displaced to the left (the battery unit 53 side), and is displaced forward. Further, the oil cooler 93 may be in the same position as the radiator 92 in the right-left direction. That is, the oil cooler 93 may be positioned alongside the radiator 92 in the front-back direction.

Via a stay or the like, the radiator 92 and the oil cooler 93 are supported inside the case 90 in FIG. 5. The radiator 92 and the oil cooler 93 are positioned between the fan 91 and the wind guide unit 100. Thus, with respect to the radiator 92 and oil cooler 93, the fan 91 is positioned on a side opposite to the wind guide unit 100.

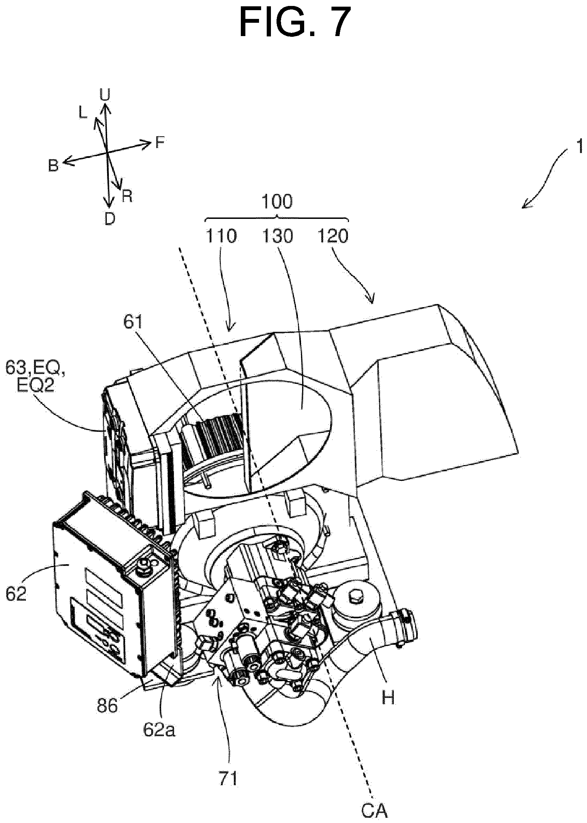

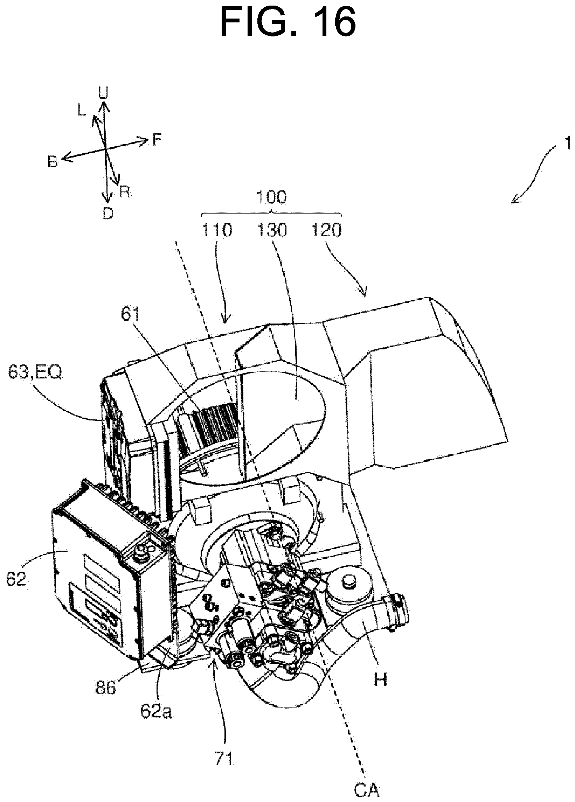

FIGS. 7 and 16 each show a perspective view of the part A with the radiator 92 and the oil cooler 93 omitted from FIG. 6. The hydraulic excavator 1 is provided with the wind guide unit 100. The wind guide unit 100 includes a first flow path unit 110 and a second flow path unit 120. The wind generated by the driving of the fan 91 passes through the first flow path unit 110 and the second flow path unit 120. Details of the wind guide unit 100 are to be described below.

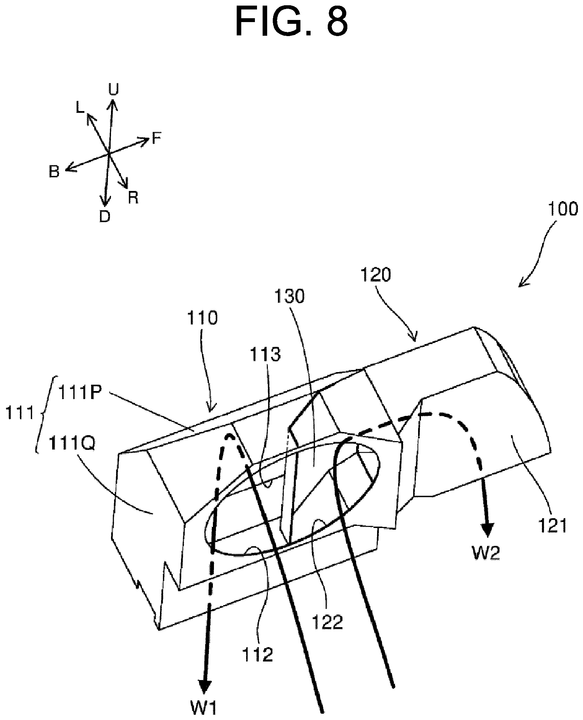

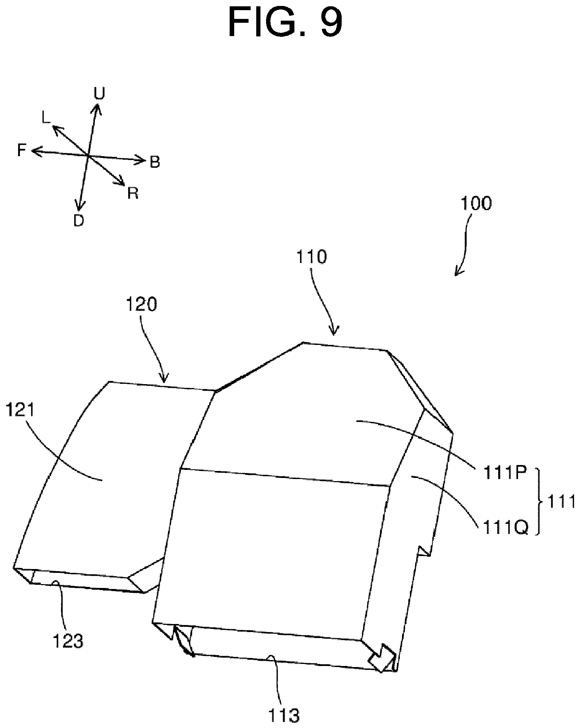

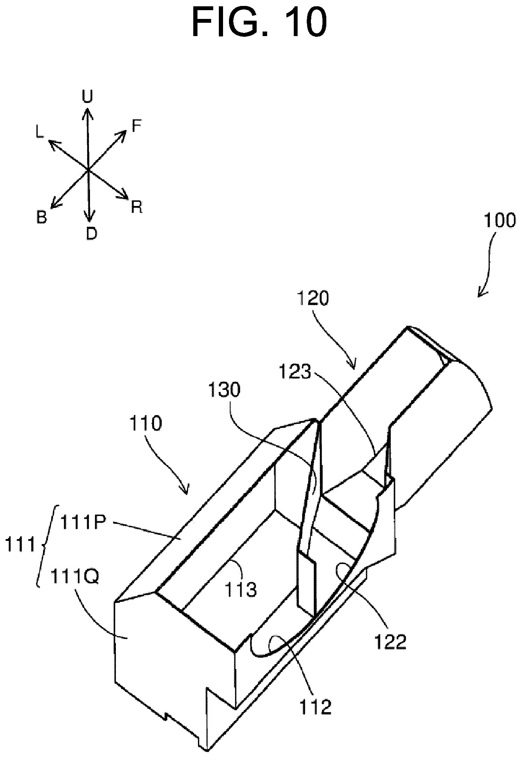

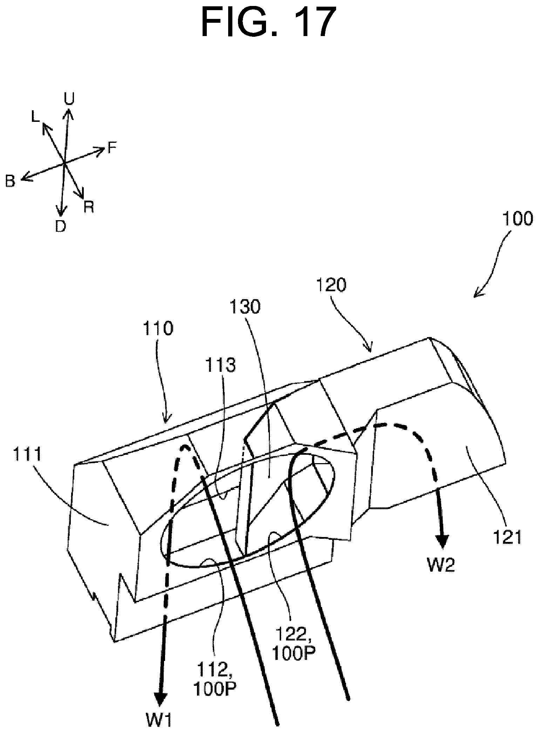

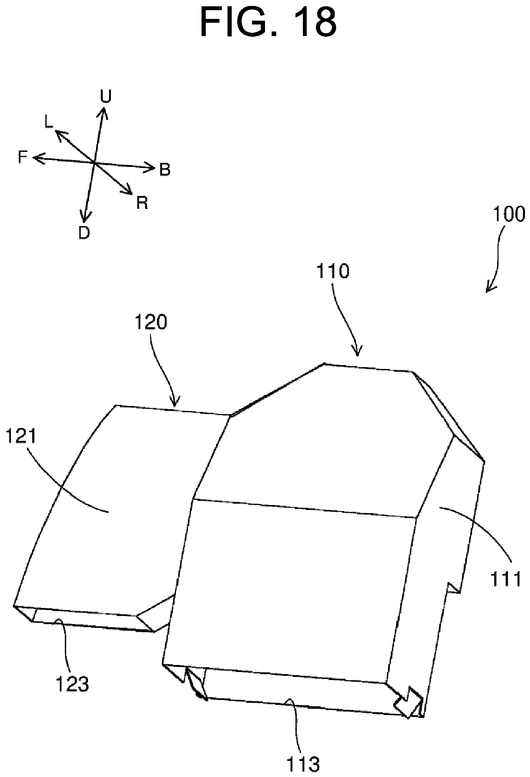

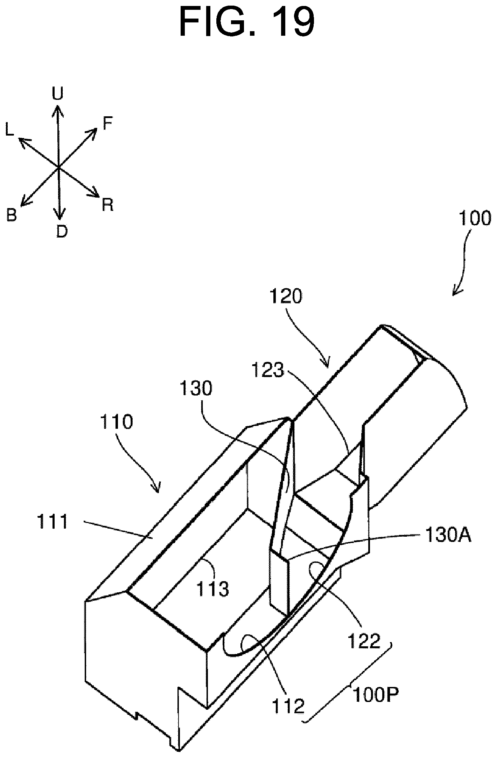

FIGS. 8 and 17 each are a perspective view, from above, of the wind guide unit 100. FIGS. 9 and 18 each are a perspective view, from below, of the wind guide unit 100. FIGS. 10 and 19 are each a perspective view of the wind guide unit 100 shown in FIGS. 8 and 17 when cut by a horizontal cross section. Further, FIG. 8 and subsequent drawings omit an illustration of the electric component EQ for convenience.

The first flow path unit 110 of the wind guide unit 100 has a first flow path body unit 111, a first flow path one end part side opening part 112, and a first flow path other end part side opening part 113. The interior of the first flow path body unit 111 is hollow. Part of the wind generated by the driving of the fan 91 passes through the interior of the first flow path body unit 111. The shape of the first flow path body unit 111 is not limited as long as having a cavity through which wind passes.

The first flow path one end part side opening part 112 is an opening formed, in the first flow path body unit 111, at one end part of the flow path direction in which the wind flows. In the present embodiment, the first flow path one end part side opening part 112 is formed in a semicircular shape, but its shape is not limited. The first flow path one end part side opening part 112 opens toward the radiator 92 (see FIG. 6) positioned on the right side relative to the first flow path body unit 111. That is, the first flow path one end part side opening part 112 is positioned facing the radiator 92. Thus, it can be said that the first flow path one end part side opening part 112 is a first partial opening positioned, in the first flow path unit 110, at one end part on the radiator 92 side.

The first flow path other end part side opening part 113 is an opening formed, in the first flow path body unit 111, at the other end part of the flow path direction in which the wind flows. In the present embodiment, the first flow path other end part side opening part 113 is formed in a rectangular shape as shown in FIGS. 8 and 17, but its shape is not limited. The first flow path other end part side opening part 113 opens downward. The first flow path other end part side opening part 113 is also be said to be a second opening part positioned, in the first flow path unit 110, at the other end part opposite to the first flow path one end part side opening part 112 as the first partial opening.

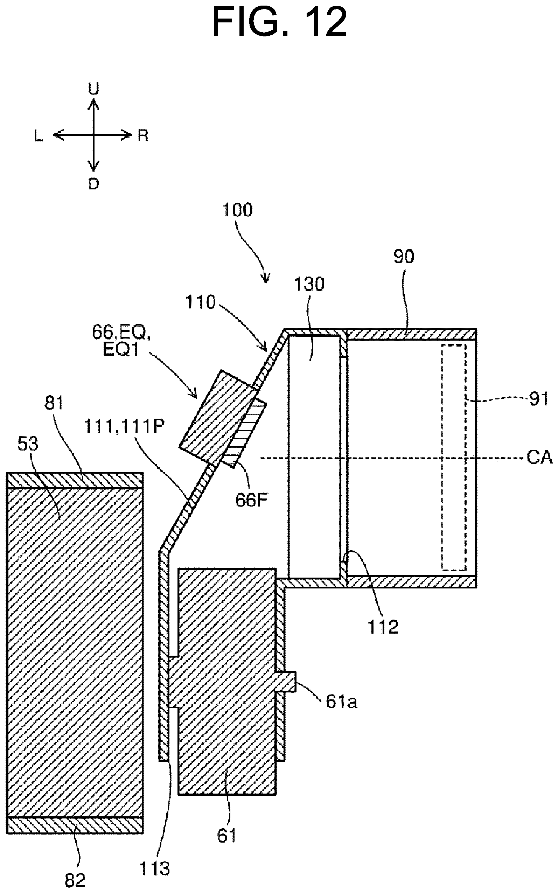

The first flow path body unit 111 includes a first wall unit 111P and a second wall unit 111Q. The first wall unit 111P is positioned intersecting the rotary shaft CA of the fan 91. The first wall unit 111P, in the direction of the rotary shaft CA, is positioned on the opposite side of the first flow path one end part side opening part 112 of the first flow path body unit 111, and is inclined relative to the rotary shaft CA (see FIG. 12). The DC-DC converter 66, that is, the first electric component EQ1 is held by the first wall unit 111P (see FIGS. 4 and 12).

The second wall unit 111Q, with respect to the first wall unit 111P, is positioned on the back side of the hydraulic excavator 1. The second wall unit 111Q is positioned along the rotary shaft CA of the fan 91. The inverter 63, that is, the second electric component EQ2 is held by the second wall unit 111Q (see FIG. 4). Further, the first electric component EQ1 may be held by the second wall unit 111Q, and the second electric component EQ2 may be held by the first wall unit 111P.

The second flow path unit 120 of the wind guide unit 100 has a second flow path body unit 121, a second flow path one end part side opening part 122, and a second flow path other end part side opening part 123. The interior of the second flow path body unit 121 is hollow. Part of the wind generated by the driving of the fan 91 passes through the interior of a second flow path body unit 121. The second flow path body unit 121 is not limited in shape as long as having a cavity through which the wind can pass.

The second flow path one end part side opening part 122 is an opening formed, in the second flow path body unit 121, at one end part of the flow path direction in which the wind flows. In the present embodiment, the second flow path one end part side opening part 122 is formed in a semicircular shape, but its shape is not limited. The second flow path one end part side opening part 122 opens toward the oil cooler 93 (see FIG. 6) positioned on the right side relative to the second flow path body unit 121. That is, the second flow path one end part side opening part 122 is positioned facing the oil cooler 93. Thus, it can be said that the second flow path one end part side opening part 122 is a second partial opening positioned, in the second flow path unit 120, at one end part on the oil cooler 93 side.

In the present embodiment, the second flow path one end part side opening part 122 is shaped to form one circle continuously connected with the first flow path one end part side opening part 112 (see FIGS. 8 and 17). Thus, it can be said that combining the first flow path one end part side opening part 112 with the second flow path one end part side opening part 122 thereby to make a first opening part 100P, and thus the wind guide unit 100 has the first opening part 100P. Then, it can be said that the first opening part 100P has the first flow path one end part side opening part 112 as the first partial opening, and the second flow path one end part side opening part 122 as the second partial opening. Further, the second flow path one end part side opening part 122 and the first flow path one end part side opening part 112 may each be formed in a closed configuration, to be spaced apart from each other.

The second flow path other end part side opening part 123 is an opening formed, in the second flow path body unit 121, at the other end part of the flow direction through which the wind flows. In the present embodiment, the second flow path other end part side opening part 123 is formed in a substantially rectangular shape, as shown in FIGS. 8 and 17, but its shape is not limited. The second flow path other end part side opening part 123 opens downward. The second flow path other end part side opening part 123 is also be said to be a third opening part positioned, in the second flow path unit 120, at the other end part opposite to the second flow path one end part side opening part 122 as the second partial opening.

Thus, it can be said that the wind guide unit 100 has the first opening part 100P, the first flow path other end part side opening part 113 as the second opening part, and the second flow path other end part side opening part 123 as the third opening part.

The wind guide unit 100 further includes a partition plate 130. That is, the hydraulic excavator 1 is provided with the partition plate 130. The partition plate 130 is a bulkhead that partitions the first flow path body unit 111 of the first flow path unit 110 from the second flow path body unit 121 of the second flow path unit 120. That is, the first flow path body unit 111 and the second flow path body unit 121 share the partition plate 130 as the bulkhead. As shown in FIG. 4, the partition plate 130, viewed from above, is positioned between the radiator 92 and oil cooler 93, and the battery unit 53. Further, the partition plate 130 extends from the right side toward the left side, then bends, and extends forward diagonally leftward, as shown in FIGS. 10 and 19. That is, the partition plate 130 is positioned across one direction (front-back in the present embodiment) which intersects the rotary shaft CA (see FIG. 4) of the fan 91 and in which the radiator 92 and the oil cooler 93 are so positioned as to be displaced from each other. The above partition plate 130 prevents the wind flowing through the interior of the first flow path body unit 111 and the wind flowing through the interior of the second flow path body unit 121 from mixing with each other inside the wind guide unit 100.

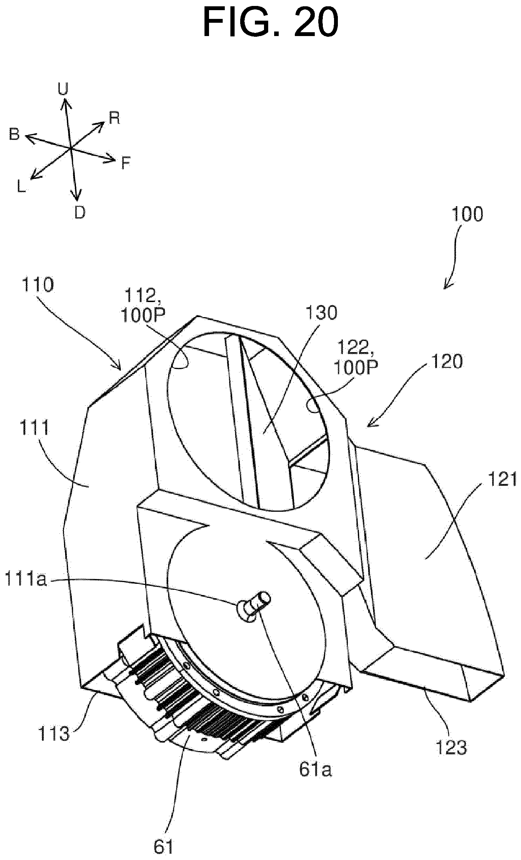

At least part of the electric motor 61 (see FIGS. 7 and 16) is positioned inside the first flow path unit 110. FIG. 20 is a perspective view, from below, of the wind guide unit 100 with the electric motor 61 received in the first flow path unit 110. In the present embodiment, the electric motor 61 is positioned at the first flow path other end part side opening part 113 of the first flow path unit 110, and crosses the first flow path other end part side opening part 113. Thus, part of the electric motor 61 is positioned inside the first flow path unit 110. Further, the entirety of the electric motor 61 may be positioned inside the first flow path unit 110. An output shaft 61a of the electric motor 61 passes through the through hole 111a provided in the first flow path body unit 111, and is connected with an input shaft of the hydraulic pump 71 (see FIG. 5, etc.).

Next, with reference to FIGS. 4 to 20, the flow of the wind (cool wind) generated by the driving of the fan 91 and the effect by the configuration of the present embodiment are to be described.

The rotation of the fan 91 around the rotary shaft CA sucks air from the outside of the hydraulic excavator 1 into the interior of the engine chamber 44. Further, the drive type of the fan 91 into which air is sucked in from the outside is also referred to here as a "suction type". The air sucked into the interior of the engine chamber 44 flows, in the case 90, from the right side to the left side.

More in detail, part of the air sucked in from the outside by the fan 91 flows across the radiator 92 in the case 90. That is, part of the above wind flows, in the case 90, through a gap of the radiator 92, or so flows along a surface of the radiator 92 as to go beyond the radiator 92. This cools the radiator 92. In other words, the refrigerant flowing through the radiator 92 is cooled by heat exchange.

Further, the remainder of the wind sucked in by the fan 91 flows across the oil cooler 93 in the case 90. That is, the remainder of the wind flows, in the case 90, through the gap of the oil cooler 93, or so flows along the surface of the oil cooler 93 as to go beyond the oil cooler 93. This cools the oil cooler 93. In other words, the hydraulic oil flowing through the oil cooler 93 is cooled by heat exchange.

The wind after cooling the radiator 92 (wind having licked the radiator 92) and the wind after cooling the oil cooler 93 (wind having licked the oil cooler 93) flow toward the first flow path unit 110 and second flow path unit 120 of the wind guide unit 100.

Here, as shown in FIGS. 8 and 17, in the wind guide unit 100, the first flow path unit 110 and the second flow path unit 120 are partitioned by the partition plate 130. Then, the first flow path unit 110, at one end part, has the first flow path one end part side opening part 112 that opens toward the radiator 92 (see FIG. 6). This allows the wind after cooling the radiator 92 to enter the interior of the first flow path unit 110 (first flow path body unit 111) via the first flow path one end part side opening part 112. The wind having flowed through the interior of the first flow path unit 110 is then discharged downward via the first flow path other end part side opening part 113. An arrow W1 in FIG. 17 shows the direction (path) in which the wind after cooling the radiator 92 flows in the first flow path unit 110.

Further, the second flow path unit 120, at one end part, has the second flow path one end part side opening part 122 that opens toward the oil cooler 93. This allows the wind after cooling the oil cooler 93 to enter the interior of the second flow path unit 120 (second path body part 121) via the second flow path one end part side opening part 122. The wind having flowed through the interior of the second flow path unit 120 is then discharged downward via the second flow path other end part side opening part 123. An arrow W2 in FIG. 8 and FIG. 17 shows the direction (path) in which the wind after cooling the oil cooler 93 flows in the second flow path unit 120.

By the way, hot (for example, about 90°C) hydraulic oil having been used to drive the hydraulic actuator 73 (see FIG. 2) is circulated back to the oil cooler 93. In contrast, the cool water flowing through the radiator 92 is about 40°C, for example, and is cooler than the hydraulic oil flowing through the oil cooler 93. Thus, the wind after cooling the radiator 92 is relatively cooler than the wind after cooling the oil cooler 93. This means that the wind flowing through the first flow path unit 110 (wind after cooling the radiator 92) is relatively cold, and the wind flowing through the second flow path unit 120 (wind after cooling the oil cooler 93) is relatively hot.

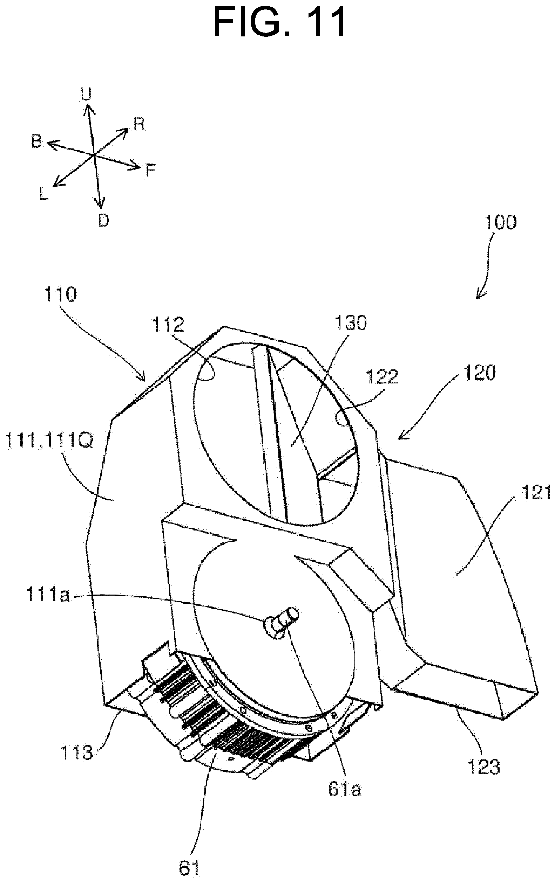

Thus, placing the electric component EQ, such as the inverter 63 and the DC-DC converter 66, in the first flow path unit 110 as shown in FIGS. 3 and 4, and placing the electric motor 61 in the first flow path other end part side opening part 113 as shown in FIGS. 11 and 20 can use the relatively cool air, which flows through the first flow path unit 110, so as to cool (air-cool) the heat-generating part such as the electric component EQ and the electric motor 61. Further, the relatively hot air flowing through the second flow path unit 120 can be discharged, as it is (without being applied to the heat-generating part), via the second flow path other end part side opening part 123 to the outside.

As described above, the radiator 92 and the oil cooler 93, viewed in the direction of the rotary shaft CA of the fan 91, are positioned overlapping the fan 91; thus driving the one fan 91 can apply the wind to both of the radiator 92 and the oil cooler 93. Thus, it is prevented that, as is the case in which plural fans are provided corresponding to individual heat exchangers, plural fans squeeze the placement space of other component such as the battery unit. As a result, a compact layout, preferable for a small electric hydraulic excavator 1, can be easily realized.

Further, the partition plate 130 partitions the space between the radiator 92 and oil cooler 93, and the battery unit 53 into one side and the other side in the one direction (for example, front-back direction). This allows the wind with temperature differences to be efficiently partitioned by the partition plate 130, to be guided to their respective spaces. Thus, as in the present embodiment, placing the first flow path unit 110 on one side in the one direction, mounting the electric component EQ to the first flow path unit 110, and placing the electric motor 61 in the first flow path other end part side opening part 113 applies one (that is, relatively cold wind after cooling the radiator 92) of the winds, which are partitioned by the partition plate 130 and which have different temperatures, to the heat-generating part such as the electric component EQ, making it possible to cool the heat-generating part. That is, one of the winds having different temperatures can be reused for cooling the heat-generating part.

Summarizing the above, the present embodiment uses the single fan 91 as a fan for cooling the radiator 92 and the oil cooler 93, thereby making it possible to realize the compact layout. Further, for reuse for cooling the heat-generating part, the partition plate 130 can efficiently partition the winds with different temperatures.

In the configuration in which the hydraulic excavator 1 is provided with the first flow path unit 110 and the second flow path unit 120 which have flow paths partitioned by the partition plate 130; from the viewpoint of efficiently sending, into the first flow path unit 110 and the second flow path unit 120, respectively, the wind after cooling the radiator 92 and the wind after cooling the oil cooler 93, it is desirable that the first flow path unit 110 and the second flow path unit 120 should be positioned as follows. That is, it is desirable that, as shown in FIG. 4, the first flow path unit 110, viewed from above, should be positioned between the radiator 92 and the battery unit 53, on one side (for example, the back side in the front-back direction) in the one direction which side is partitioned by the partition plate 130. Further, it is desirable that the second flow path unit 120, viewed from above, should be positioned between the oil cooler 93 and the battery unit 53, on the other side (for example, the front side in the front-back direction) in the one direction which side is partitioned by the partition plate 130.

Further, from the viewpoint of making the wind guide unit 100 compact thereby to acquire the above effect of the present embodiment, it is desirable to integrate the first flow path unit 110, the second flow path unit 120, and the partition plate 130. From the above view point, it is desirable that the hydraulic excavator 1 should be provided with the wind guide unit 100 that holds the partition plate 130, and that the wind guide unit 100 should have the first flow path unit 110 and the second flow path unit 120.

In terms of guiding, into the interior of the wind guide unit 100, the wind after cooling the radiator 92 and the wind after cooling the oil cooler 93, and discharging, through separate flow paths, these temperature-differentiated winds outside the machine, it is desirable that the wind guide unit 100 should have the first opening part 100P, the first flow path other end part side opening part 113 as the second opening part, and the second flow path other end part side opening part 123 as the third opening part. And, it is desirable that the first opening part 100P should have the first flow path one end part side opening part 112 as the first partial opening positioned, in the first flow path unit 110, at the one end part on the radiator 92 side, and the second flow path other end part side opening part 123 as the second partial opening positioned, in the second flow path unit 120, at the one end part on the oil cooler 93 side.

In the present embodiment, the DC-DC converter 66 and the inverter 63 are held by the wind guide unit 100 (especially, the first wall unit 111P and the second wall unit 111Q), as described above. The wind guide unit 100, in the direction of the rotary shaft CA, is positioned between the fan 91 and the battery unit 53, as shown in FIG. 4. Thus, the electric component EQ, viewed from above, is positioned between the fan 91 and the battery unit 53.

In the above configuration, the wind is applied from the fan 91 to the electric component EQ, making it possible to cool (air-cool) the electric component EQ. Thus, while effectively using, as the space for placing the electric component EQ, the limited narrow space between the fan 91 and the battery unit 53, it is possible to cool (air-cool) the electric component EQ.

In particular, from the viewpoint of effectively using, as the space for placing plural electric components EQ (first electric component EQ1, second electric component EQ2), the space between the fan 91 and the battery unit 53, and applying the wind of the fan 91 to the plural electric components EQ thereby to cool them at once (efficiently), it is desirable that the plural electric components EQ should be positioned as follows. That is, it is desirable that, as the electric components EQ, the first electric component EQ1 and the second electric component EQ2, viewed from above, should be so positioned as to be displaced from each other. For example, as shown in FIG. 4, it is desirable that the first electric component EQ1 should be displaced in front of the hydraulic excavator 1 relative to the second electric component EQ2.

Further, from the viewpoint of using both of the cool wind, which is generated by the rotation of the fan 91 and hits the first wall unit 111P, and the cool wind, which is generated by the rotation of the fan 91 and flows along the second wall unit 111Q, thereby to efficiently cool the plural electric components EQ, it is desirable that the first electric component EQ1 should be held by the first wall unit 111P and the second electric component EQ2 should be held by the second wall unit 111Q, as in the present embodiment.

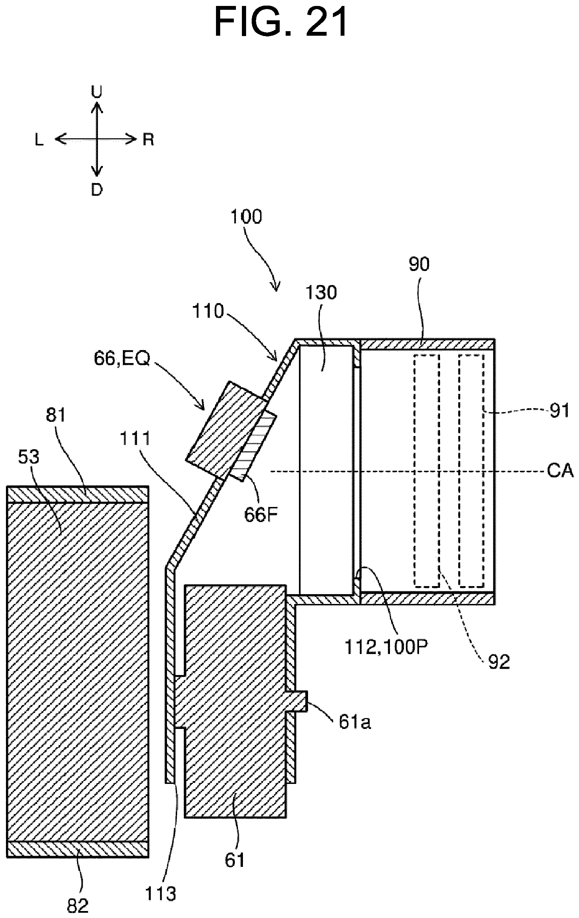

FIGS. 12 and 21 each show a cross-sectional view of the first flow path unit 110 of the wind guide unit 100 when cut by cross section through the electric component EQ. Further, FIGS. 12 and 20 show the DC-DC converter 66 (first electric component EQ1) as the electric component EQ. The above electric motor 61 is positioned on the fan 91 side with respect to the battery unit 53. From the viewpoint of effectively using, as the space for placing the electric component EQ, the space which is between the fan 91 and the battery unit 53 and which is narrow above the electric motor 61, it is desirable that the electric component EQ should be positioned above the electric motor 61.

Further, from the viewpoint of applying, to the electric component EQ, the wind flowing through the first flow path unit 110, that is, the relatively cold wind after cooling the radiator 92, thereby to securely cool the electric component EQ, it is desirable that the electric component EQ should be held (mounted) to the first flow path unit 110.

Here, the DC-DC converter 66 as the electric component EQ, that is, the first electric component EQ1 has a first heat sink unit 66F. The first heat sink unit 66F includes a fin, for example. From the viewpoint of applying the cold wind (cool wind from the fan 91) to the first heat sink unit 66F thereby to increase the efficiency of cooling the electric component EQ1, it is desirable that the first heat sink unit 66F should be positioned on the fan 91 side with respect to the first wall unit 111P. That is, it is desirable that the first electric component EQ1 should be so mounted (embedded) to (in) the first flow path unit 110 that the first heat sink unit 66F is positioned inside the first flow path unit 110.

Further, the configuration in which the heat sink unit is positioned inside the first flow path unit 110 is also applicable to the inverter 63 as the electric component EQ. That is, in the configuration where the inverter 63 has a heat sink unit 63F, as shown in FIG. 4, it is desirable, from the viewpoint of improving the cooling efficiency, that the inverter 63 should be so mounted (embedded) to (in) the first flow path unit 110 that the heat sink unit 63F is positioned inside the first flow path unit 110.

From the viewpoint of securing the effective use, for cooling (air-cooling) the electric motor 61, of the relatively cold wind after cooling the radiator 92, it is desirable that at least part of the electric motor 61 should be positioned inside the first flow path unit 110, as shown in FIGS. 11, 12, 20 and 21. Further, from the viewpoint of quickly discharging the air having cooled the electric motor 61, it is desirable that the electric motor 61 should be positioned at the first flow path other end part side opening part 113 as the second opening part. Further, the electric motor 61 may be positioned below the first flow path other end part side opening part 113.

Further, for improving the efficiency of cooling the electric component EQ placed in the first flow path unit 110, it is desirable that the relatively cold wind after cooling the radiator 92 should be prevented from mixing, on the upstream side of the partition plate 130, with the relatively hot wind after cooling the oil cooler 93, thus keeping, at a low temperature, the temperature of the wind guided to the first flow path unit 110 (the wind after cooling the radiator 92). From the above viewpoint, it is desirable that the fan 91, with respect to the radiator 92 and the oil cooler 93, should be positioned opposite to the partition plate 130, as shown in FIG. 4 and the like. Then, it is desirable that the fan 91 should send the wind toward the radiator 92 and the oil cooler 93. In the above configuration, the winds after cooling the radiator 92 and the oil cooler 93, respectively, by the wind sent from the fan 91 are guided almost directly to the two spaces (insides of the first flow path unit 110 and the second flow path unit 120) partitioned by the partition plate 130. That is, both of the winds, with reduced mixing on the upstream side of the partition plate 130, are respectively guided to the two spaces.

Further, as shown in FIG. 4, the inverter 63 as the electric component EQ, that is, the second electric component EQ2 has a second heat sink unit 63F. The second heat sink unit 63F includes a fin, for example. From the viewpoint of applying the cold wind (cool wind from the fan 91) to the second heat sink unit 63F in a licking manner thereby to securely cool the second electric component EQ2, it is desirable that the second heat sink unit 63F should be positioned on the rotary shaft CA side of the fan 91 with respect to the second wall unit 111Q. That is, it is desirable that the second electric component EQ2 should be so mounted (embedded) to (in) the first flow path unit 110 that the second heat sink unit 63F is positioned inside the first flow path unit 110.

Further, in the present embodiment, the radiator 92 is positioned facing the fan 91, as shown in FIGS. 4 to 6. Making it possible to use, for cooling the electric component EQ, the wind which is generated by the driving of the fan 91 and which was used for cooling the radiator 92 makes it possible to omit placing of a fan dedicated to cooling the electric component EQ. From the viewpoint of cooling the electric component EQ with the simple configuration (with fewer parts) that omits the placing of the above dedicated fan, it is desirable that the electric component EQ, viewed from above, should be positioned between the battery unit 53 and the radiator 92.

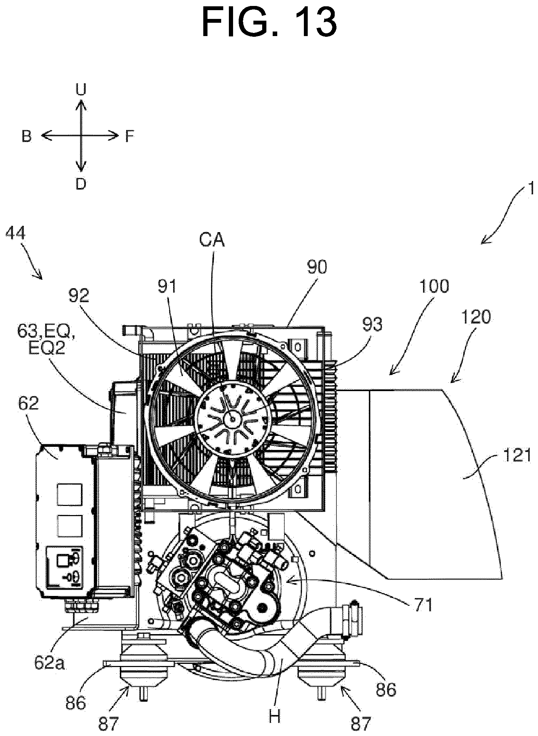

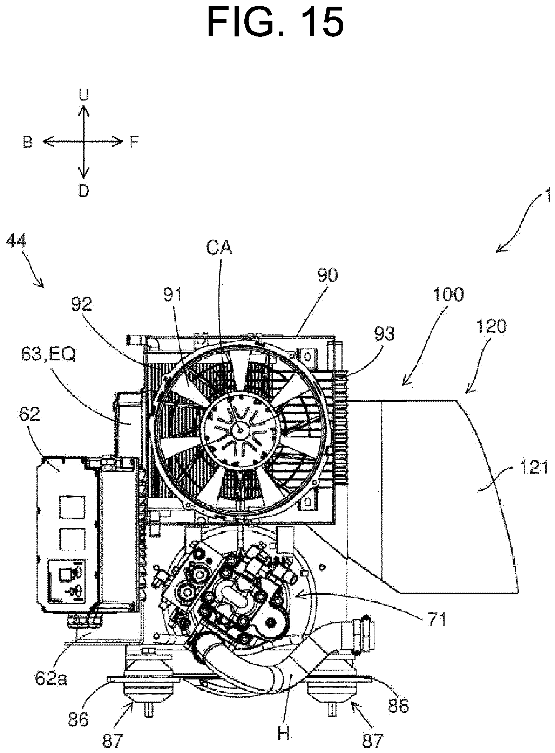

FIGS. 13 and 15 each are a side view, from right, of the part A in FIG. 4, that is, viewed in the direction of the rotary shaft CA of the fan 91. From the viewpoint of driving the one fan 91 thereby to simultaneously cool the radiator 92 and the oil cooler 93, it is desirable that the radiator 92 and the oil cooler 93, viewed in the direction of the rotary shaft CA of the fan 91, should be positioned overlapping the fan 91, that is, facing the fan 91. Further, as shown in FIGS. 6 and 15, the radiator 92 and the oil cooler 93 are so positioned as to be displaced from each other in the one direction (for example, front-back direction) that intersects the rotary shaft CA. Further, the radiator 92 and the oil cooler 93 may be so positioned as to be displaced in the up-down direction.

Further, the electric motor 61, in a state of being connected with the hydraulic pump 71 in the direction (right-left) of extension of the output shaft 61a (see FIGS. 11 and 20), is supported on a bottom plate 86. The bottom plate 86 is supported via a vibration-proof member 87 to on the turn frame 42 (see FIG. 3, etc.). This supports the electric motor 61 and hydraulic pump 71 on the turn frame 42 in a vibration-proof manner.

From the viewpoint of easily realizing a compact layout preferable for the small hydraulic excavator 1, it is desirable that the radiator 92 and the oil cooler 93 should be so positioned as to be displaced from each other in the one direction (for example, front-back direction) that intersects the rotary shaft CA, as shown in FIGS. 4 and 6. Further, the radiator 92 and the oil cooler 93 may be so positioned as to be displaced in the up-down direction.

Further, in the present embodiment, the wind after cooling the radiator 92 by the driving of the fan 91 is guided to one of the spaces (inside the first flow path unit 110) which are partitioned by the partition plate 130, as described above. Meanwhile, the wind after cooling the oil cooler 93 by the driving of the fan 91 is guided to the other space (inside the second flow path unit 120) which are partitioned by the partition plate 130. This allows the cool wind guided to any one of the spaces to be reused for cooling the electric component EQ. At this time, the wind after cooling the radiator 92 is cooler than the wind after cooling the oil cooler 93; thus, it is desirable to reuse, for cooling the electric component EQ, the wind after cooling the radiator 92.

Thus, from the viewpoint of securely partitioning the wind after cooling the radiator 92 from the wind after cooling the oil cooler 93 in a manner to be guided to the two spaces, it is desirable that the partition plate 130, viewed from above, should be positioned between the radiator 92 and oil cooler 93, and the battery unit 53, and should be positioned across the one direction (for example, front-back direction), as shown in FIG. 4.

Further, the front-back position of the partition plate 130's end part 130A on the fan 91 side is not particularly limited. However, in the placement of overlapping the radiator 92 with the oil cooler 93 in the direction of the rotary shaft CA, as in the present embodiment, it is desirable that the above end part 130A should be positioned facing an overlap area RV between the radiator 92 and the oil cooler 93. Meanwhile, in the placement of not overlapping the radiator 92 with the oil cooler 93 in the direction of the rotary shaft CA (placement of arranging in the front-back direction), it is desirable that the above end part should be positioned facing a boundary between the radiator 92 and the oil cooler 93.

Further, for improving the efficiency of cooling the electric component EQ placed in the first flow path unit 110, it is desirable that the relatively cold wind after cooling the radiator 92 should be prevented from mixing, on the upstream side of the partition plate 130, with the relatively hot wind after cooling the oil cooler 93, thus keeping, at a low temperature, the temperature of the wind guided to the first flow path unit 110 (the wind after cooling the radiator 92). From the above viewpoint, it is desirable that, with respect to the radiator 92 and oil cooler 93, the fan 91 should be positioned upstream in the direction of sending the wind, as shown in FIG. 4. That is, it is desirable that the fan 91 should be positioned opposite to the battery unit 53 with respect to the radiator 92 and oil cooler 93. In the above placement of the fan 91, the winds sent toward the radiator 92 and the oil cooler 93 thereby to have cooled the respective members are guided almost directly to the two spaces (insides of the first flow path unit 110 and the second flow path unit 120) that are partitioned by the partition plate 130. That is, both of the winds, with reduced mixing on the upstream side of the partition plate 130, are respectively guided to the two spaces.

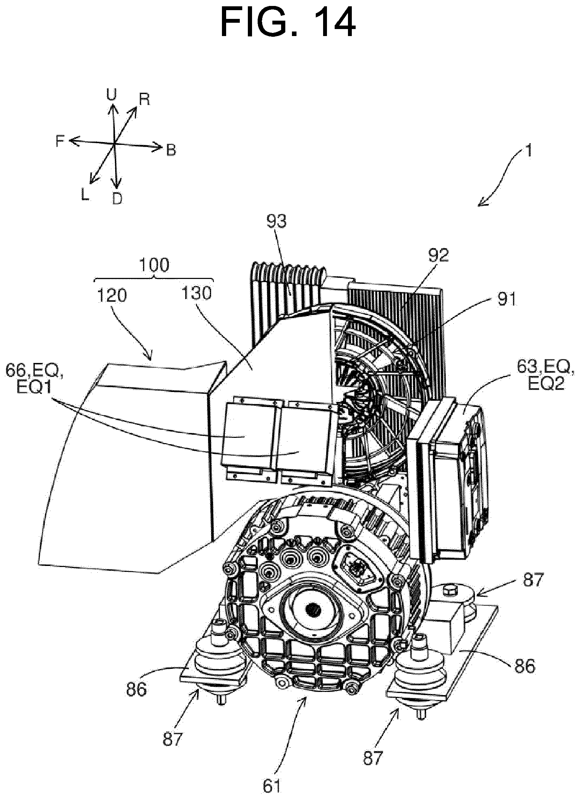

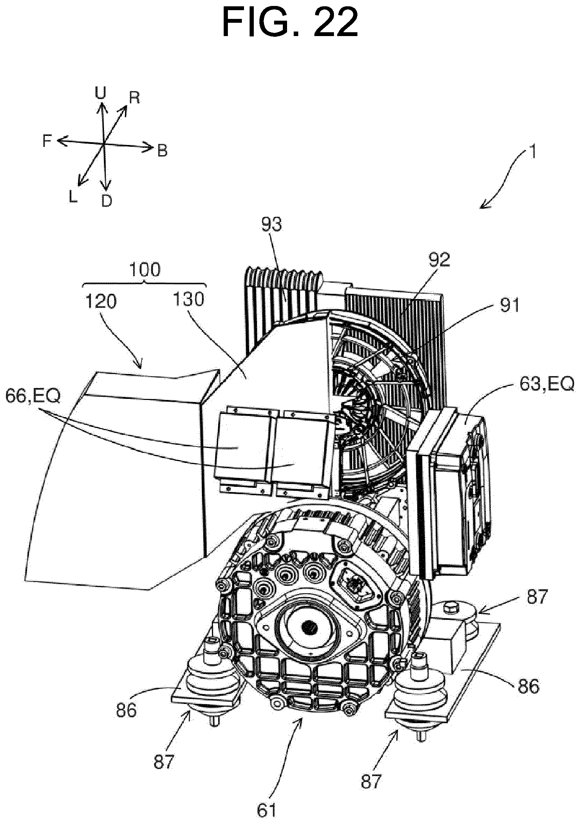

FIGS. 14 and 22 each show a perspective view of a modified configuration of the suction type. Further, FIG. 14, for convenience, omit an illustration of the first flow path unit 110 of the wind guide unit 100. As shown in the same drawings; with respect to the radiator 92 and oil cooler 93, the fan 91 may be positioned on the wind guide unit 100 side, that is, the battery unit 53 side (see FIG. 4, etc.). Even with the above placement of the fan 91, the fact remains unchanged that, from the right side in the right-left direction (from the radiator 92 and oil cooler 93 sides with respect to the fan 91), the driving of the fan 91 sucks in the air outside the machine, thereby to make it possible to cool the radiator 92 and the oil cooler 93. Further, the fact remains unchanged that the fan 91 guides, to the partition plate 130 side, the wind having cooled the radiator 92 and the wind having cooled the oil cooler 93, and applies, to the electric component EQ, the wind (for example, the wind having been used for cooling the radiator 92) that is guided to one of the spaces partitioned by the partition plate 130, making it possible to cool the electric component EQ.

However, in the above configuration; driving the fan 91 sucks air in from the outside, thus causing the wind, which cooled the radiator 92, and the wind, which cooled the oil cooler 93, to flow across the fan 91 toward the partition plate 130. The fan 91 is rotating, thus causing a concern that the wind having cooled the radiator 92 and the wind having cooled the oil cooler 93 may mix (before the partition plate 130) after crossing the fan 91. In this respect, it is desirable that, with respect to the radiator 92 and the oil cooler 93, the fan 91 should be positioned on the opposite side of the partition plate 130 (opposite to the battery unit 53), as shown in FIG. 4 and the like.

From the viewpoint of applying the wind of the fan 91 to the electric component EQ positioned, viewed from above, between the battery unit 53 and the fan 91 thereby to securely cool the electric component EQ, it is desirable that the fan 91, viewed from above, should be positioned facing the battery unit 53 side, as shown in FIG. 4 and the like.

In particular, from the viewpoint of acquiring; in the suction-type configuration, the above effect of the present embodiment, it is desirable that the fan 91, viewed from above, should send air toward the battery unit 53.

In terms of narrowing the total width of the radiator 92 and oil cooler 93 in the one direction (for example, front-back direction) intersecting the rotary shaft CA thereby to compactly place the radiator 92 and the oil cooler 93, it is desirable that the radiator 92 and the oil cooler 93 should be positioned partially overlapping (viewed in the direction of the rotary shaft CA), as shown in FIG. 15, etc.

Further, from the viewpoint of securely cooling the radiator 92 and the oil cooler 93 simultaneously by the driving of the one fan 91, it is desirable that the radiator 92 and the oil cooler 93, viewed in the direction of the rotary shaft CA, should be positioned overlapping the fan 91, that is, facing the fan 91.

In the present embodiment, the front-back position of the partition plate 130's end part 130A (see FIG. 4 and FIG. 19) on the fan 91 side is not particularly limited. However, in the configuration where the radiator 92 and the oil cooler 93 are so positioned as to overlap in the direction of the rotary shaft CA, as in the present embodiment; from the viewpoint of increasing the efficiency of partitioning the wind after cooling the radiator 92 from the wind after cooling the oil cooler 93, it is desirable that the partition plate 130's end part 130A on the fan 91 side, in the direction of the rotary shaft CA, should be positioned facing the overlap area RV (see FIG. 4) between the radiator 92 and the oil cooler 93. Further, in the placement where the radiator 92 and the oil cooler 93 do not overlap in the direction of the rotary shaft CA (placement of arranging in the front-back direction), the end part 130A should be positioned facing the boundary between the radiator 92 and the oil cooler 93.

Further, although the example of applying the wind guide unit 100 to the suction-type configuration has been described in the present embodiment, it is also possible to apply the wind guide unit 100 to a discharge-type configuration. The discharge type refers to the type of driving the fan 91, in which type the air inside the engine chamber 44 is discharged to the outside by the driving of the fan 91. In the discharge type, however, the placement of the radiator 92 and the oil cooler 93 needs be reversed from that of the suction type, or the flow path unit where the heat-generating parts such as electric component EQ and electric motor 61 are placed needs to be reversed from that of the suction type. In any case; in the discharge type, it is sufficient that the heat-generating part should be positioned in the second flow path unit 120.

### [4. Supplement]

The description has been made with the hydraulic excavator 1, which is the construction machine, as the example of the electric work machine, but the electric work machine is not limited to the hydraulic excavator 1 and may be any other construction machine such as a wheel loader. Further, the electric work machine may be an agricultural machine such as a combine harvester, a tractor or the like.

### [5. Appendices]

The hydraulic excavator 1 described in the present embodiment can also be expressed as an electric work machine as shown in the following appendices.

An electric work machine of appendix (1) includes: an electric motor; a battery unit that stores electric power for driving the electric motor; an electric component to which the electric power is supplied from the battery unit; and a fan, wherein the electric component, viewed from above, is positioned between the fan and the battery unit.

The electric work machine of appendix (2), in the electric work machine according to appendix (1), is such that the electric motor is positioned on the fan side with respect to the battery unit, and the electric component is positioned above the electric motor.

The electric work machine of appendix (3), in the electric work machine of appendix (1) or (2), is such that the electric component includes a first electric component and a second electric component, and the first electric component and the second electric component, viewed from above, are so positioned as to be displaced from each other.

The electric work machine of appendix (4), in the electric work machine according to appendix (3), is such that the fan, viewed from above, has a rotary shaft extending toward the battery unit, the first electric component is held by a first wall unit that is positioned intersecting the rotary shaft of the fan, and the second electric component is held by a second wall unit that is positioned along the rotary shaft of the fan.

The electric work machine of appendix (5), in the electric work machine according to appendix (4), is such that the first electric component has a first heat sink unit, and the first heat sink unit is positioned on the fan side with respect to the first wall unit.

The electric work machine of appendix (6), in the electric work machine according to appendix (4) or (5), is such that the second electric component has a second heat sink unit, and the second heat sink unit is positioned on the rotary shaft side of the fan with respect to the second wall unit part.

The electric work machine of appendix (7), in the electric work machine according to any one of appendices (1) to (6), further includes: a first heat exchanger that cools a refrigerant which passes through the battery unit, wherein the first heat exchanger is positioned facing the fan, and the electric component, viewed from above, is positioned between the battery unit and the first heat exchanger.

The electric work machine of appendix (8), in the electric work machine according to appendix (7), further includes: a hydraulic pump that is driven by the electric motor, a hydraulic actuator that is driven by a hydraulic oil supplied from the hydraulic pump, a second heat exchanger that cools the hydraulic oil, and a partition plate, wherein the first heat exchanger and the second heat exchanger are so positioned as to be displaced from each other in one direction intersecting the rotary shaft of the fan, and the partition plate, viewed from above, is positioned between the first heat exchanger and second heat exchanger, and the battery unit, and is positioned across the one direction.

The electric work machine of appendix (9), in the electric work machine according to appendix (8), is such that the first heat exchanger and the second heat exchanger are positioned facing the fan.

The electric work machine of appendix (10), in the electric work machine of appendix (9), is such that the fan is positioned opposite to the battery unit, with respect to the first heat exchanger and the second heat exchanger.

The electric work machine of appendix (11), in the electric work machine according to appendix (9), is such that the fan is positioned on the battery unit side, with respect to the first heat exchanger and the second heat exchanger.

The electric work machine of appendix (12), in the electric work machine according to any one of appendices (1) to (11), is such that the fan, viewed from above, is positioned facing the battery unit side.

The electric work machine of appendix (13), in the electric work machine of any one of appendices (1) to (12), is such that the fan, viewed from above, sends air toward the battery unit.

The electric work machine of appendix (14) includes: the battery unit, the electric motor that is driven by electric power supplied from the battery unit, a first heat exchanger that cools a refrigerant which passes through the battery unit, a hydraulic pump that is driven by the electric motor thereby to discharge a hydraulic oil, a second heat exchanger that cools the hydraulic oil, a fan that has a rotary shaft, and a partition plate, wherein the first heat exchanger and the second heat exchanger, viewed from a direction of the rotary shaft, are positioned overlapping the fan, and are so positioned as to be displaced from each other in one direction intersecting the rotary shaft, and the partition plate, viewed from above, is positioned between the first heat exchanger and second heat exchanger, and the battery unit, and is positioned across the one direction.

The electric work machine of appendix (15), in the electric work machine according to appendix (14), further includes: a first flow path unit and a second flow path unit which have paths partitioned by the partition plate, wherein the first flow path unit, viewed from above, is positioned between the first heat exchanger and the battery unit, on one side in one direction which side is partitioned by the partition plate, and the second flow path unit, viewed from above, is positioned between the second heat exchanger and the battery unit, on another side in the one direction which side is partitioned by the partition plate.

The electric work machine of appendix (16), in the electric work machine according to appendix (15), further includes: a wind guide unit that holds the partition plate, wherein the wind guide unit has the first flow path unit and the second flow path unit.

The electric work machine of appendix (17), in the electric work machine according to appendix (16), is such that the wind guide unit has a first opening part, a second opening part, and a third opening part, the first opening part has a first partial opening and a second partial opening, the first partial opening, in the first flow path unit, is positioned at one end part on the first heat exchanger side, the second partial opening, in the second flow path unit, is positioned at one end part on the second heat exchanger side, the second opening part, in the first flow path unit, is positioned at another end part on a side opposite to the first partial opening, and the third partial opening, in the second flow path unit, is positioned at another end part on a side opposite to the second partial opening.

The electric work machine of appendix (18), in the electric work machine according to appendix (17), further includes: an electric component to which the power is supplied from the battery unit, wherein the electric component is held by the first flow path unit.

The electric work machine of appendix (19), in the electric work machine according to appendix (17) or (18), is such that at least part of the electric motor is positioned inside the first flow path unit.

The electric work machine of appendix (20), in the electric work machine according to appendix (19), is such that the electric motor is positioned in the second opening part of the first flow path unit.

The electric work machine of appendix (21), in the electric work machine according to any one of appendices (14) to (20), is such that the fan is positioned opposite to the partition plate, with respect to the first heat exchanger and the second heat exchanger.

The electric work machine of appendix (22), in the electric work machine according to appendix (21), is such that the fan sends a wind toward the first heat exchanger and the second heat exchanger.

The electric work machine of appendix (23), in the electric work machine according to any one of appendices (14) to (22), is such that the first heat exchanger and the second heat exchanger are positioned partially overlapping.

The electric work machine of appendix (24), in the electric work machine according to appendix (23), is such that the partition plate's end part on the fan side, in the direction of the rotary shaft, is positioned facing an overlap area between the first heat exchanger and the second heat exchanger.

The electric work machine of appendix (25), including an electric motor that is driven by electric power supplied from a battery unit, a hydraulic pump that is driven by the electric motor thereby to discharge a hydraulic oil, a heat exchanger that cools the hydraulic oil and opposes a fan, and an electric component to which the power is supplied from the battery unit, and is, viewed from above, positioned so that the electric component cooled by an air blown by the fan is displaced from the heat exchanger.

The embodiment of the present invention has been described above, but the scope of the present invention is not limited thereto, and can be carried out within an extended or modified range without departing from the gist of the present invention.

### INDUSTRIAL APPLICABILITY

The present invention is applicable to a work machine such as a construction machine and an agricultural machine, for example.

### REFERENCE SIGNS LIST

1 hydraulic excavator (electric work machine)
53 battery unit
61 electric motor
63 inverter (electric component, second electric component)
63F second heat sink unit
66 DC-DC converter (electric component, first electric component)
66F first heat sink unit
71 hydraulic pump
73 hydraulic actuator
91 fan
92 radiator (first heat exchanger)
93 oil cooler (second heat exchanger)
100 wind guide unit
100P first opening part
110 first flow path unit
111P first wall unit
111Q second wall unit
112 first flow path one end part side opening part (first partial opening)
113 first flow path other end part side opening part (second opening part)
120 second flow path unit
122 second flow path one end part side opening part (second partial opening)
123 second flow path other end part side opening part (third opening part)
130 partition plate
130A end part
CA rotary shaft
EQ electric component
EQ1 first electric component
EQ2 second electric component
RV overlap area

## Claims

1. An electric work machine comprising:
an electric motor;
a battery unit that stores electric power for driving the electric motor;
an electric component to which the electric power is supplied from the battery unit; and
a fan,
wherein the electric component, viewed from above, is positioned between the fan and the battery unit.

2. The electric work machine according to claim 1, wherein
the electric motor is positioned on the fan side with respect to the battery unit, and
the electric component is positioned above the electric motor.

3. The electric work machine according to claim 2, wherein
the electric component includes a first electric component and a second electric component, and
the first electric component and the second electric component, viewed from above, are so positioned as to be displaced from each other.

4. The electric work machine according to claim 3, wherein
the fan, viewed from above, has a rotary shaft extending toward the battery unit,
the first electric component is held by a first wall unit that is positioned intersecting the rotary shaft of the fan, and
the second electric component is held by a second wall unit that is positioned along the rotary shaft of the fan.

5. The electric work machine according to claim 4, wherein
the first electric component has a first heat sink unit, and
the first heat sink unit is positioned on the fan side with respect to the first wall unit part.

6. The electric work machine according to claim 5, wherein
the second electric component has a second heat sink unit, and
the second heat sink unit is positioned on the rotary shaft side of the fan with respect to the second wall unit part.

7. The electric work machine according to claim 6, further comprising:
a first heat exchanger that cools a refrigerant which passes through the battery unit,
wherein
the first heat exchanger is positioned facing the fan, and
the electric component, viewed from above, is positioned between the battery unit and the first heat exchanger.

8. The electric work machine according to claim 7, further comprising:
a hydraulic pump that is driven by the electric motor,
a hydraulic actuator that is driven by a hydraulic oil supplied from the hydraulic pump,
a second heat exchanger that cools the hydraulic oil, and
a partition plate,
wherein
the first heat exchanger and the second heat exchanger are so positioned as to be displaced from each other in one direction intersecting the rotary shaft of the fan, and
the partition plate, viewed from above, is positioned between the first heat exchanger and second heat exchanger, and the battery unit, and is positioned across the one direction.

9. The electric work machine according to claim 8, wherein
the first heat exchanger and the second heat exchanger are positioned facing the fan.

10. An electric work machine, comprising:
a battery unit,
an electric motor that is driven by electric power supplied from the battery unit,
a first heat exchanger that cools a refrigerant which passes through the battery unit,
a hydraulic pump that is driven by the electric motor thereby to discharge a hydraulic oil,
a second heat exchanger that cools the hydraulic oil,
a fan that has a rotary shaft, and
a partition plate,
wherein
the first heat exchanger and the second heat exchanger, viewed from a direction of the rotary shaft, are positioned overlapping the fan, and are so positioned as to be displaced from each other in one direction intersecting the rotary shaft, and
the partition plate, viewed from above, is positioned between the first heat exchanger and second heat exchanger, and the battery unit, and is positioned across the one direction.

11. The electric work machine according to claim 10, further comprising:
a first flow path unit and a second flow path unit which have paths partitioned by the partition plate,
wherein
the first flow path unit, viewed from above, is positioned between the first heat exchanger and the battery unit, on one side in one direction which side is partitioned by the partition plate, and
the second flow path unit, viewed from above, is positioned between the second heat exchanger and the battery unit, on another side in the one direction which side is partitioned by the partition plate.

12. The electric work machine according to claim 11, further comprising:
a wind guide unit that holds the partition plate,
wherein
the wind guide unit has the first flow path unit and the second flow path unit.

13. The electric work machine according to claim 12, wherein
the wind guide unit has a first opening part, a second opening part, and a third opening part,
the first opening part has a first partial opening and a second partial opening,
the first partial opening is positioned at one end part on the first heat exchanger side, in the first flow path unit,
the second partial opening is positioned at one end part on the second heat exchanger side, in the second flow path unit,
the second opening part is positioned at another end part on a side opposite to the first partial opening, in the first flow path unit, and
the third partial opening is positioned at another end part on a side opposite to the second partial opening, in the second flow path unit.

14. The electric work machine according to claim 13, further comprising:
an electric component to which the power is supplied from the battery unit,
wherein
the electric component is held by the first flow path unit.

15. The electric work machine according to claim 14, wherein
at least part of the electric motor is positioned inside the first flow path unit.

16. The electric work machine according to claim 15, wherein
the electric motor is positioned in the second opening part of the first flow path unit.

17. The electric work machine according to claim 16, wherein
the fan is positioned opposite to the partition plate, with respect to the first heat exchanger and the second heat exchanger.

18. The electric work machine according to claim 17, wherein
the fan sends a wind toward the first heat exchanger and the second heat exchanger.

19. The electric work machine according to claim 18, wherein
the first heat exchanger and the second heat exchanger are positioned partially overlapping.

20. An electric work machine, comprising:
an electric motor that is driven by electric power supplied from a battery unit,
a hydraulic pump that is driven by the electric motor thereby to discharge a hydraulic oil;
a heat exchanger that cools the hydraulic oil and opposes a fan; and
an electric component to which the power is supplied from the battery unit, wherein
the electric work machine is, as viewed from above, positioned so that the electric component cooled by an air blown by the fan is displaced from the heat exchanger.
